# EUROPEAN PATENT SPECIFICATION

(11) **EP 2 017 129 B1**
(45) Date of publication and mention of the grant of the patent: **26.10.2011**
(21) Application number: 08012726.9
(22) Date of filing: 15.07.2008
(51) Int. Cl.: B60R 9/05, B60R 9/058

(54) **Support foot for vehicle roof carriers bars**
Stützfuss für einen Fahrzeug-Dachträgerholme
Pied de support d'une barre de toit pour véhicule automobile

(30) Priority: 17.07.2007 IT MI20070252 U
(43) Date of publication of application: 21.01.2009
(73) Proprietor: C.A.M. Costruzione Autoaccessori Milano S.r.l., 20123 Milano (IT)
(72) Inventor: Primavesi, Mario, 20123 Milano (IT)
(74) Representative: Raimondi, Margherita

(56) References cited:
- EP-A1- 1 325 842
- US-A- 4 166 560
- US-A1- 2004 134 951

## Description

The present invention relates to a support foot for universal carrier bars of vehicles and the like, which has an extractable cover piece.

It is known in the technical sector of motor vehicle accessories that there exists the need to provide support parts for auxiliary bars (so-called universal carrier bars) which are to be fastened to the roof of the vehicle and to which luggage racks, ski holders and the like are fixed.

It is also known that these support parts or feet must be structurally designed such that they can be easily adapted to any shape of the roof and have a cover piece which can be fitted at the end of the assembly operations so as to cover the projecting parts, providing the assembled unit with an aerodynamic effect and finished aesthetic appearance.

These known feet and cover pieces are, however, difficult to assemble, in particular in the case of inexpert users, and have the drawback that, once assembly has been completed, the cover piece is not locked in position, but is also able to be easily removed if required. The corresponding prior art according to the preamble of claim 1 is disclosed in EP 1 325 842, US 4 166 560 and US 2004/134951.

The technical problem which is posed, therefore, is that of providing a support foot for universal carrier bars of vehicles and the like, having a cover piece which may be fitted to / removed from the said foot by the user, in a precise manner and without the need for tools and which, once fitted, is firmly secured in the direction parallel to the direction of travel of the vehicle so as to avoid accidental and unwanted removal thereof.

In connection with this technical problem it is required, moreover, that this device should have small dimensions and a low weight and be easy and inexpensive to manufacture and assemble and be able to be easily installed by any user using normal standardized connection means.

These results are achieved according to the present invention by a support foot for universal carrier bars of vehicles according to the characteristic of claim 1.

Further details may be obtained from the following description of a non-limiting example of embodiment of the object of the present invention, provided with reference to the accompanying drawings in which:
Figure 1 shows a front exploded view, from the inner side, of the foot according to the invention;
Figure 2 shows a front view, from the inner side, of the foot according to Fig. 1 assembled;
Figure 3 shows a cross-section along the plane indicated by the line III-III in Fig. 2;
Figure 4 shows a front view, from the inner side, of the foot according to Fig.1 during removal of the cover piece; and
Figure 5 shows a schematic and partially sectioned side view of the foot according to Fig. 4.

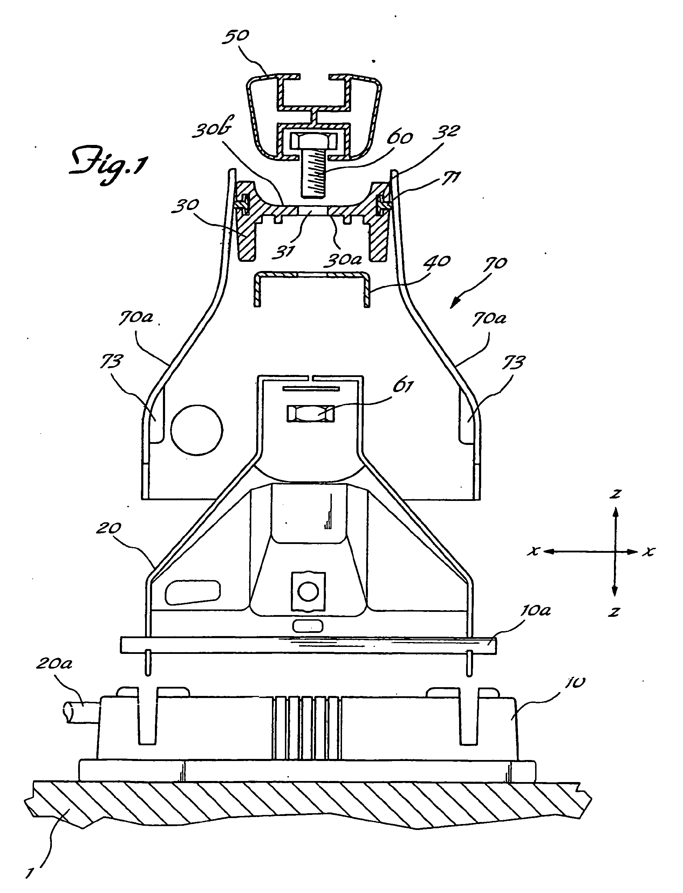

As shown in Fig. 1 and assuming for the sole sake of convenience of the description and without a limiting meaning a set of three reference axes in the longitudinal direction X-X, transverse direction Y-Y and vertical direction Z-Z, respectively, as well as an outer side corresponding to the side for insertion/extraction of the cover piece and an inner side opposite to the outer side, the support foot for universal carrier bars according to the invention comprises essentially:
- a base 10 for resting on the roof 1 of a vehicle;
- a shaped body 20 hinged with the base 10 by means of a transverse pin 10a;
a guide 30 shaped in the form of an H so as to have a bottom surface 30a making contact with a metal flange 40, a top surface 30b for containing a transverse bar 50, and a hole 31 with a vertical axis for receiving a bolt 60 for locking the assembly in the vertical direction Z-Z.

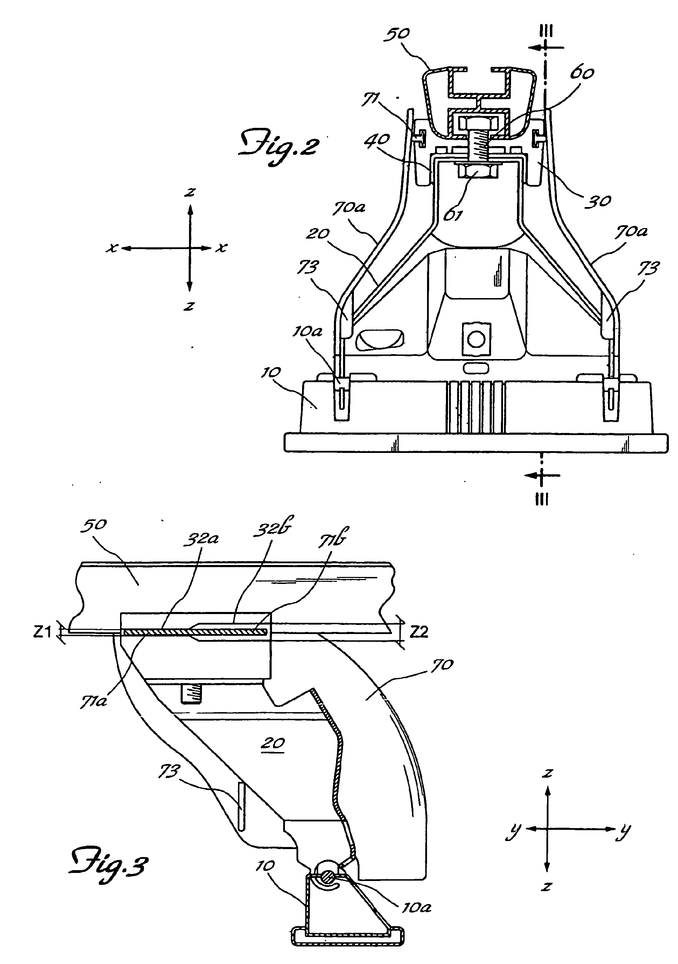

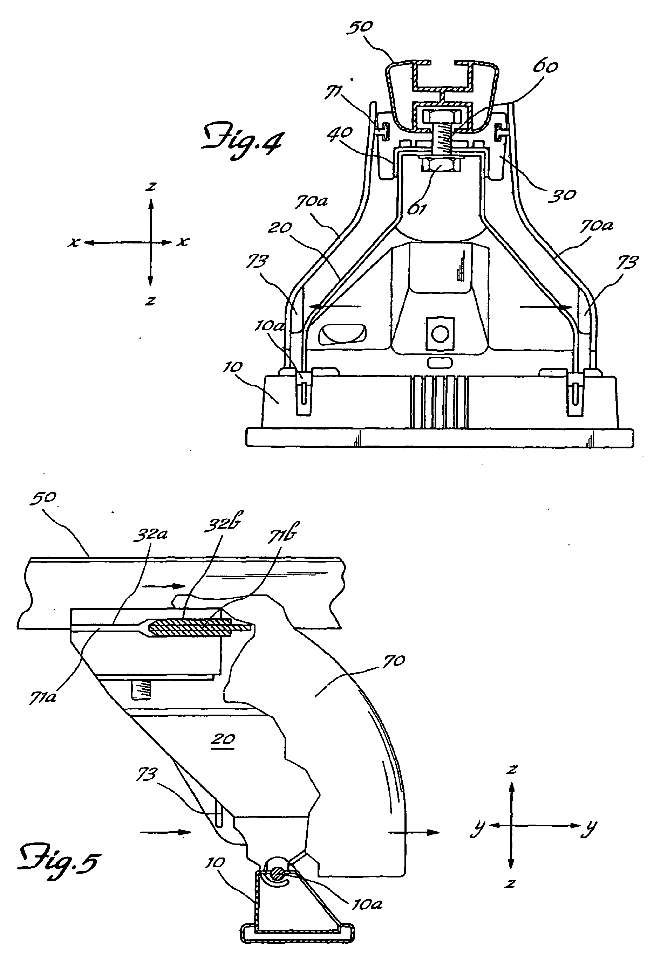

The guide 30 has, moreover, a seat 32 formed on each vertical side of the H and extending in the transverse direction Y-Y and with a T-shaped cross-section; in greater detail, said seat 32 has (see Figs. 3 and 5), in the transverse direction Y-Y, a first inner section 32 of smaller height Z1 and a second outer section 32b of greater height Z2.

The two seats 32 in the opposite vertical sides of the guide 30 are suitable for insertion, in the transverse direction, of a respective slide 71 extending in the transverse direction and projecting towards the inside of the cover piece 70 of the foot.

The slide 71 has a T-shaped cross-section and is shaped with a first inner section 71a of greater height Z2 and a second outer section 71b of smaller height Z1.

The closing piece 70 has, moreover, two fins 73 projecting towards the inside in the transverse direction Y-Y and arranged in a lower position in the direction Z-Z of the sides 70a of the closing piece itself.

Advantageously, said sides 70a are elastically deformable outwards following a pulling force applied by the user as will be understood more clearly below.

With this configuration the operating principle of the foot is as follows:
- once the foot has been mounted and the base 10 assembled with the body 20 and the transverse bar 50 positioned on the seat 30b of the guide 30,
- the whole assembly is locked by tightening the bolt 60 with the corresponding nut 61;
- repeating the operation on both ends of the bar, the assembly is made structurally stable by fastening it to the roof 1 of the vehicle.

The operations are conventional per se and therefore not described in greater detail.

Once the foot has been assembled it is possible to:
- insert the cover piece 70 in the transverse direction Y-Y, introducing the slides 71 inside the respective lateral guides 32 of the guide 30;
- during insertion the slide part 71a with a larger dimension Z2 enters firstly so that, once insertion has been completed, it will be in a transverse position corresponding to the guide part 40a with a smaller dimension Z1, preventing relative movements in the transverse direction.

The particular form of the seats 41 and the guides 70 also has the function of establishing a unique direction of assembly of the guide 40 on the body 20; if in fact it were attempted to mount the former in the opposite direction (rotated by 180°), insertion of the cover piece 70 would be prevented by the greater size of the slide 71 compared to that of the seat 32.

During insertion in the transverse direction Y-Y (Fig. 4) the cover piece undergoes, in its bottom part, which is not constrained, an elastic deformation outwards in the transverse longitudinal direction X-X caused by the fins 73 pressing against the sides of the body 20;
- once insertion has been completed, the fins 73 pass beyond the free edge of the side 20a of the body 20, allowing the elastic return of the side 70a into the rest condition which brings the fins 73 into a position where they interfere in the transverse direction with the body 20 (Fig. 2).

In this way, the cover piece is prevented from extraction in the transverse direction which may be performed only following an intentional action involving widening of its sides 70a performed by the user (Fig. 4).

It is therefore clear how with the support foot for universal carrier bars of vehicles according to the invention it is possible to avoid errors in positioning of the various component parts during assembly of the said foot as well fit onto / remove from the foot the cover piece in a precise manner without the need for tools, ensuring moreover, once insertion has been completed, that the cover piece is firmly secured in the direction parallel to the direction of travel of the vehicle so as to prevent accidental and unwanted removal.

## Claims

1. Support foot for universal carrier bars of vehicles, comprising:
- a base (10) for resting on the roof (1) of the vehicle,
- a shaped body (20) hinged with the base (10) by means of a transverse pin (10a),
- a guide (30) able to contain a transverse bar (50) and means (60) for locking the assembly in the vertical direction (Z-Z)
- a cover piece (70) that
has a slide (71) extending in the transverse direction (Y-Y) and projecting towards the inside from each side (70a) of the cover piece (70) itself and able to engage with a respective seat (32) formed in each vertical side of the guide (50), **characterized in that**
each side (70a) of the cover piece (70) is elastically deformable outwards and has at least one respective fin (73) projecting towards the inside in the transverse direction (Y-Y)
and **in that**
the fins (73) press the sides of the body (20) during the insertion in the transverse direction (Y-Y) of the cover causing said elastic deformation outwards in the transverse longitudinal direction (X-X) of each bottom side (70a) of the cover piece (70) while the fins (73) pass beyond the free edge of the side of the body (20) once the insertion has been completed, allowing the elastic return of the bottom side (70a) of the cover piece (70) into the rest condition which brings the fins (73) into a position where they interfere in the transverse direction with the body (20).

2. Foot according to Claim 1, **characterized in that** said guide (30) is shaped in the form of an H.

3. Foot according to Claim 2, **characterized in that** said guide (30) has a bottom surface (30a) making contact with a metallic flange (40), a top surface (30b) containing a transverse bar (50), and a hole (31) with a vertical axis for receiving means (60) for locking the assembly in the vertical direction (Z-Z).

4. Foot according to Claim 2, **characterized in that** said guide (30) has a seat (32) formed in each vertical side of the H.

5. Foot according to Claim 4, **characterized in that** said seat (32) extends in the transverse direction (Y-Y) and has a T-shaped cross-section.

6. Foot according to Claim 4, **characterized in that**, in the transverse direction (Y-Y), said seat (32) has a first, inner, section (32a) of smaller height (Z1) and a second, outer, section (32b) of greater height (Z2).

7. Foot according to Claim 6, **characterized in that** each slide (71) has a T-shaped cross-section and is shaped with a first, inner, section (71a) of greater height (Z2) and a second, outer section (71b) of lower height (Z1).

## Patentansprüche

1. Halterungsfuß für Universalträgerstangen von Kraftfahrzeugen, umfassend:
eine Basis (10) zum Ruhen auf dem Dach (1) des Fahrzeugs,
einen Formkörper (20), der mittels eines Querstifts (10a) gelenkig mit der Basis (10) verbunden ist,
eine Führung (30), die in der Lage ist, eine Querstange (50) und eine Einrichtung (60) zum Verriegeln der Anordnung in vertikaler Richtung (Z-Z) aufzunehmen,
ein Deckstück (70), welches ein sich in Querrichtung (Y-Y) erstreckendes und von jeder Seite (70a) des Deckstücks (70) nach innen ragendes Gleitstück (71) aufweist, welches in der Lage ist, mit einem zugehörigen Sitz (32), der in jeder vertikalen Seite der Führung (50) ausgebildet ist, in Eingriff zu treten, **dadurch gekennzeichnet, dass**
jede Seite (70a) des Deckstücks (70) nach außen elastisch verformbar ist und mindestens eine zugehörige, in Querrichtung (Y-Y) nach innen vorstehende Finne (73) besitzt, und dass die Finnen (73) während des Einsetzens in der Querrichtung (Y-Y) des Deckstücks gegen die Seiten des Körpers (20) drücken und die elastische Verformung in Quer-Längsrichtung (X-X) jeder Bodenseite (70a) des Deckstücks (70) nach außen veranlassen, während die Finnen (73) über die freie Kante der Seite des Körpers (20) gelangen, nachdem das Einführen abgeschlossen ist, um das elastische Zurückstellen der Bodenseite (70a) des Deckstücks (70) in den Ruhezustand zu ermöglichen, was die Finnen (73) in eine Stellung bringt, in der sie in Querrichtung mit dem Körper (20) kollidieren.

2. Fuß nach Anspruch 1, **dadurch gekennzeichnet, dass** die Führung (30) in der Form eines H geformt ist.

3. Fuß nach Anspruch 2, **dadurch gekennzeichnet, dass** die Führung (30) eine Bodenfläche (30a) aufweist, die Kontakt mit einem metallischen Flansch (40) hat, eine Oberseite (30b) besitzt, die eine Querstange (50) enthält, und ein Loch (31) mit einer vertikalen Achse zum Aufnehmen einer Einrichtung (60) zum Verriegeln der Anordnung in der vertikalen Richtung (Z-Z) besitzt.

4. Fuß nach Anspruch 2, **dadurch gekennzeichnet, dass** die Führung (30) einen in jeder vertikalen Seite des H ausgebildeten Sitz (32) aufweist.

5. Fuß nach Anspruch 4, **dadurch gekennzeichnet, dass** der Sitz (32) sich in der Querrichtung (Y-Y) erstreckt und einen T-förmigen Querschnitt aufweist.

6. Fuß nach Anspruch 4, **dadurch gekennzeichnet, dass** in der Querrichtung (Y-Y) der Sitz (32) einen ersten, inneren Abschnitt (32a) geringerer Höhe (Z1) und einen zweiten, äußeren Abschnitt (32b) größerer Höhe (Z2) besitzt.

7. Fuß nach Anspruch 6, **dadurch gekennzeichnet, dass** jedes Gleitstück (71) einen T-förmigen Querschnitt aufweist und mit einem ersten, inneren Abschnitt (71 a) größerer Höhe (Z2) und einem zweiten, äußeren Abschnitt (71 b) geringerer Höhe (Z1) ausgeformt ist.

## Revendications

1. Pied de support pour barres support universelles pour véhicules, comprenant :
- une base (10) pour reposer sur le toit (1) du véhicule,
- un corps profilé (20) articulé à la base (10) au moyen d'une tige transversale (10a),
- un guide (30), en mesure de contenir une barre transversale (50) et des moyens (60) pour verrouiller l'ensemble en direction verticale (Z-Z),
- une pièce formant couvercle (70), comprenant un coulisseau (71) s'étendant dans la direction transversale (Y-Y) et faisant saillie vers l'intérieur à partir de chaque côté (70a) de la pièce formant couvercle (70) elle-même et en mesure de venir en prise avec un siège (32) respectif, formé dans chaque côté vertical du guide (50),
**caractérisé en ce que** chaque côté (70a) de la pièce formant couvercle (70) est déformable élastiquement vers l'extérieur et comprend au moins une ailette (73) respective, faisant saillie vers l'intérieur dans la direction transversale (Y-Y),
et **en ce que**
les ailettes (73) pressent les côtés du corps (20) durant l'insertion dans la direction transversale (Y-Y) du couvercle en provoquant ladite déformation élastique vers l'extérieur dans la direction longitudinale (X-X) transversale de chaque côté inférieur (70a) de la pièce formant couvercle (70), tandis que
les ailettes (73) passent au-delà du bord libre du côté du corps (20), une fois que l'insertion a été achevée, permettant le rappel élastique du côté (70a) de la pièce formant couvercle (70) à la position de repos, qui place les ailettes (73) en une position dans laquelle elles interfèrent dans la direction transversale avec le corps (20).

2. Pied selon la revendication 1, **caractérisé en ce que** ledit guide (30) est conformé en H.

3. Pied selon la revendication 2, **caractérisé en ce que** ledit guide (30) présente une surface inférieure (30a) établissant un contact avec un rebord (40) métallique, une surface supérieure (30b) contenant une barre transversale (50), et un trou (31) avec un axe vertical, pour recevoir des moyens (60) pour verrouiller l'ensemble dans la direction verticale (Z-Z).

4. Pied selon la revendication 2, **caractérisé en ce que** ledit guide (30) comprend un siège (32) formé dans chaque côté vertical du H.

5. Pied selon la revendication 4, **caractérisé en ce que** ledit siège (32) s'étend dans la direction transversale (Y-Y) et présente une section transversale en forme de T.

6. Pied selon la revendication 4, **caractérisé en ce que**, dans la direction transversale (Y-Y), ledit siège (32) présente une première section (32a) intérieure de plus petite hauteur (Z1) et une deuxième section (32b) extérieure de plus grande hauteur (Z2).

7. Pied selon la revendication 6, **caractérisé en ce que** chaque coulisseau (71) présente une section transversale en forme de T et est conformé avec une première section (71a) intérieure de plus grande hauteur (Z2) et une deuxième section (71b) extérieure de plus petite hauteur (Z1).
